# EUROPEAN PATENT SPECIFICATION

(11) **EP 1 622 347 B1**
(45) Date of publication and mention of the grant of the patent: **06.06.2007**
(21) Application number: 04425571.9
(22) Date of filing: 29.07.2004
(51) Int. Cl.: H04M 3/42

(54) **Computer-piloted telephone exchange for management of telephone positions and/or workstations**
Computergesteuerte Telefonvermittlungsstelle zur Verwaltung von Telefonen und/oder Arbeitsplatzsystemen
Central téléphonique contrôlée par ordinateur pour la gestion des positions des téléphones et/ou des postes de travail

(43) Date of publication of application: 01.02.2006
(73) Proprietor: 2K Elektronika, 20099 Sesto S. Giovanni MI (IT)
(72) Inventor: Hu, Feng Chu, 20099 Sesto S. Giovanni MI (IT); Colombo, Paolo, 20100 Milano MI (IT); Nosari, Mauro, 20100 Milano MI (IT)
(74) Representative: Arena, Giovanni

(56) References cited:
- EP-A- 0 765 092
- EP-A- 0 851 655
- US-A1- 2004 136 346
- JOHNSON P ET AL: "COMPUTER TELEPHONY INTEGRATION THE MERIDIAN 1 PBX" BRITISH TELECOMMUNICATIONS ENGINEERING, BRITISH TELECOMMUNICATIONS ENGINEERING. LONDON, GB, vol. 15, no. PART 2, 1 July 1996 (1996-07-01), pages 150-155, XP000598798 ISSN: 0262-401X

## Description

The present invention has for its object a computer-piloted telephone exchange for management of telephone positions and/or workstations and designed to allow complete automation of the telephone traffic routing and rating procedures.

### BACKGROUND

- Equipment used in commercial businesses such as phone centers and internet points allow supplying telephone calls and/or navigation services on PC networks. This equipment carries out numerous functions such as documentation of output traffic, memorization of main call-parameters (number called, duration of call, related cost et cetera) and possible telephone companies usable as well as automatic choice of the company offering the lowest rating.

These, however, have some limits such as for example the impossibility of receiving and routing calls coming from outside and the lack of a telephone for listening to and manual routing of call by the operator.

Examples of computer telephony integration systems are described in the documents "Computer Telephony Integration, The Meridian 1 PBX", British Telcommunications Engineering, vol.15, part 2, pages 150-155, and US 2004/0136346 A1.

The article "Computer Telephony Integration, The Meridian 1PBX", describes a CTI (Computer Telephony Integration) system comprising a PBX and a Host computer running a PBX driver software and an application programming software. The PBX driver software communicates with the PBX through a link interface, while the application programming software converts messages to and from the link interface into messages suitable for application creations. The PBX comprises an automatic call distribution system for distributing calls to functional groups of a call-center managing large volume of telephone calls having a predictable and uniform content, and a customer controlling routing software which routes incoming calls according to various priority levels. A statistics and management reporting system is used to set service levels and monitor performance in call-centre environments. A voice mail system is also present to provide call answering that leaves messages when the called person is engaged, and a voice messaging for composing messages to be sent to a user's mailbox.

US 2004/0136346 A1 describes a CTI system comprising a PBX connected to an ISDN (Integrated Services Digital. Network), a plurality of work stations having telephone terminals and computer terminals, a CTI server connected to the PBX via a data link and CTI interfaces, and a telephony card connected to the PBX via multiplex communication links to respective sets of extension ..numbers, and connected to the CTI server for receiving commands and sending signalling information. A LAN is connected via the ISDN to the remote workstations, and is connected to the CTI server and to local workstations. When an incoming call is received for a user who has multiple alerting telephone numbers including a remote telephone number, the CTI controller receives a first call identity generated by PBX, commands the PBX to route the call to the card, generates a second call identity chosen among multiple alerting telephone numbers of the called user and commands the card to make an outgoing call associated to the second call identity, via the PBX to the remote telephone, and to join the calls when the outgoing call is answered. Than the card monitors the network signalling and reports to the CTI controller when the remote telephone clears down.

### OBJECTS OF THE INVENTION

The purpose of the present invention is to make available a computer-piloted telephone exchange allowing overcoming the above-mentioned limitations of known equipment and allowing among other things, in addition to complete automation of the routing and rating procedure of telephone traffic:
- receiving and routing telephone calls coming from outside so as to be usable like a common telephone exchange,
- managing telephone calls and network (internet) navigation with a single piece of equipment,
- execution personally on the computer by the operator managing the telephone exchange of routing operations to help users in difficulty in their telephone position, and
- automatically interrupting the call if within a preset .initial time from reception of the beginning rating tone the user does not confirm manually the good beginning of the contact.

### SUMMARY OF THE INVENTION

The telephone exchange for management of telephone positions in accordance with the present invention is characterized as per the following claim 1.

### DRAWINGS

The characteristics and advantages of the present invention will be clarified by the following description of a non-limiting preferred embodiment given with reference to the annexed drawings in which:
- FIG 1: shows a block diagram of an embodiment of the telephone exchange in accordance with the present invention in its use as a conventional telephone exchange and as a phone center,
- FIG 2: shows a block diagram of an embodiment of the telephone exchange in accordance with the present invention in its use extended to workstation management,
- FIG 3: shows a flow chart of the operations controlled by the control software:for rating start confirmation,
- FIG 4: show a flow chart of the software procedure for management of the charges associated with the calls made,
- FIG 5: shows a flow chart of the software procedure for management of credits associated with the calls made, and
- FIG 6: shows a flow chart of the software procedure for management of the workstation type positions.

### DESCRIPTION OF PREFERRED EMBODIMENTS OF THE INVENTION

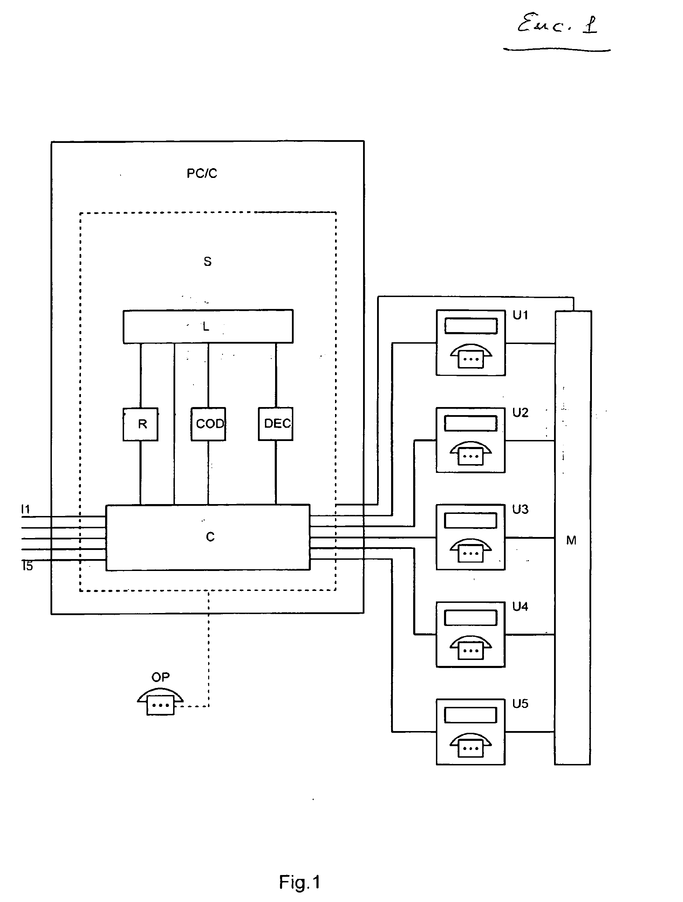

With reference to the FIGS FIG 1 shows the block diagram of an embodiment of the telephone exchange in accordance with the present invention in its use as a conventional telephone exchange and as a phone center.

The telephone exchange calls for the presence in combination of:
- five user-positions U1 to U5 each equipped with a telephone and a display for viewing the data of the telephone call under way,
- the same number of external telephone lines l1 to l5 connectable to the telephones of said positions,
- an operator's telephone OP for listening to and manual routing of the calls by the operator,
- a decoder DEC of DTMF (Dual Tone Multi-Frequency) telephone selection signals designed to convert said signals into digital code signals,
- an encoder COD designed to convert digital code telephone selection signals into DTMF telephone selection signals,
- a telephone line status detector R designed to detect the status of each telephone line leading to a user position and in particular the actual engagement of an internal line by a user or its disengagement or the arrival on an external line of a ringing signal or a rating start or a line engagement by the called user,
- a personal computer PC/C having the function of passing telephone traffic control and routing of the calls provided with a card S of the PCI (Peripheral Component Interconnect) type connected to user positions U1 to U5 and to a logical unit L acting as interface with the above-mentioned decoder DEC, encoder COD and detector R, a card by means of which the computer, on control of a software installed therein:

- sends to each user position the signal for the information to be displayed on the associated screen,
- commands the routing of the calls onto the external telephone lines l1 to l5,
- processes commands coming from the operator's telephone OP,
- provides a commutation device C to which lead the external telephone lines and the internal ones outgoing from the operator's telephone and from the positions of the users and connected to the above-mentioned decoder DEC, encoder C, detector R and logical unit L, and
- a control software installed on the personal computer PC/C and governing the following operations:

- sending to the commutation device C as soon as a signal signifying line engagement by a user is received from the detector R a commutation command of the internal user line onto the inlet of the decoder DEC and commutation of the outlet of the encoder COD onto one of the external lines, and then, after receiving the signal for the called number outgoing from the decoder DEC, sending to the input of the encoder COD a binary code signal expressing the called number and the prefix of the telephone service company having the lowest rate and lastly commutating the above-mentioned internal user's line onto the above-mentioned external line,
- as soon as a signal signifying a ringing signal arrives on an external line from the detector (R), commutating said line onto the operator's telephone to allow the latter to listen to the call and rout it manually to the destination user.

In accordance with a preferred solution, the above-mentioned control software also sends to the commutation device C a command for interruption of the telephone connection if a signal signifying good starting of the call has not arrived in the meantime from the position of the connected user after a predetermined time period T (for example 5 seconds) from reception of the rating start signal by the line manager (or in its absence from reception of the line engagement signal by the called user). Indeed, once a connection is activated and the rating start signal has reached the user's position, the user must press within time T a button confirming good starting of the call (for example a button chosen from among those of the telephone keypad). This is both to avoid charging the user with long fruitless waiting times following connection and to avoid a phone center equipped with this telephone exchange the cost of calls not chargeable to the customer because of his fraudulent behavior or his long useless wait at the beginning of the call.

Indeed, telephone line companies normally charge the Phone Center with a cost calculated on the basis of the time elapsed between the moment the called party engages the line and the moment the caller closes the call. At the moment the called party engages the line, the companies (the majority) send onto the line a rating start signal. In addition, many Phone Centers enable use of the calling customer's microphone from the moment the latter presses a purposeful button on the telephone keypad (hereafter "enabling button") and start rating the customer from this moment. It follows that fraudulent calling customers can receive even long lasting calls free with the simple stratagem of omitting to press the enabling button during the entire time of reception of the call.

In addition, it frequently occurs that a calling user realizes that there is an unsuccesful connection only after a relatively long time, for example 30 seconds.

With the above-mentioned preferred embodiment the connection time not chargeable by the Phone Center to the customer is at the most 5 seconds depending on the example.

As shown in the figure, the card S is connected to the user positions through an interface unit M designed both to handle the data coming from S and directed to the various displays of the positions and to forward to S the good connection signals emitted by the user.

The broken line of FIG 1 connecting the telephone OP to the card S shows that optionally the commands which can be given from the operator's telephone keypad can be transmitted to the PC/C by direct connection with the card S.

As regards reception of incoming calls, the operator's capability to manually direct the call to the destination user is allowed by the fact that the program resident on the PC/C calls for recognition of encoded commands sent to the PC/C by means of the operator's telephone keypad or by means of the PC/C keyboard.

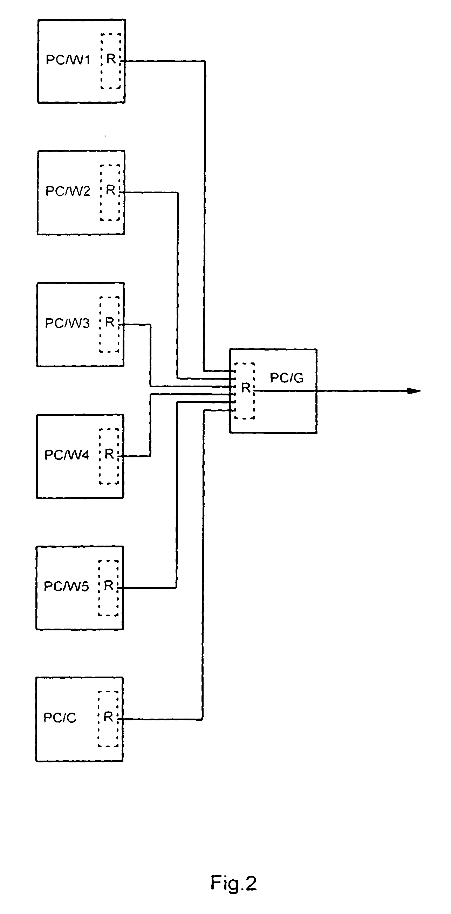

The block diagram of FIG 2 shows utilization of the control computer PC/C extended to management of workstations.

It shows the control computer PC/C connected through a personal computer PC/G having the function of access gateway to the external network with five personal computers PC/W1 to PC/W5 each with a workstation function. The control computer PC/C, the gateway function computer PC/G and the workstation PC are equipped each with a network card R allowing interconnection of the PCs.

A server software resident in the PC/C, a client software resident in the PC/W to PC/W5, and a demon software resident in the PC/G (making use of a database present in the PC/G memory in which are recorded the data of the system machines, i.e. IP addresses, codes chosen to identify the user, interconnections between the resources of the various PC/Ws et cetera) allow managing activation and management of the workstation work sessions.

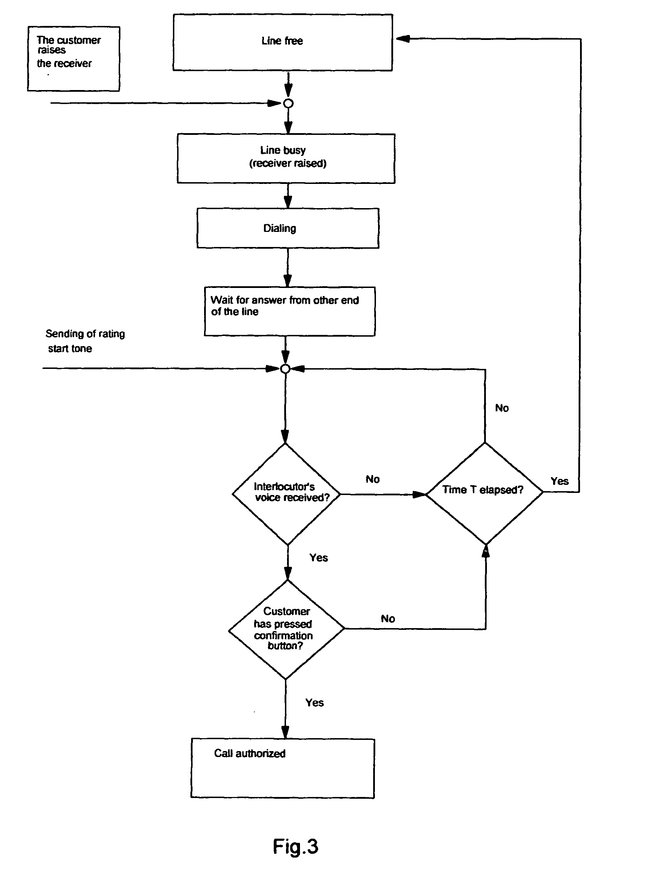

FIG 3 shows the flow chart of the operations regulated by the control software for rating start confirmation.

In accordance with said chart, engagement of a telephone line consequent to raising of the receiver by the calling user follows composition of the called number by same, its decoding and subsequent encoding by the control software and forwarding on the external line of the signal resulting from the encoding (i.e. DTMF signal equipped appropriately with the prefix of selection of the company having the lowest rate) and lastly commutation of the external line onto the position of the calling user. The telephone exchange thus waits for sending of the rating start signal by the line company (or the line engagement signal by the called user) and, as soon as said signal is received, displays start of the rating count in the calling user position, then waiting for the user, once the voice of the interlocutor at the other end of the line is received, to confirm the good start of the call by pressing the purposeful button. If, after elapse of the wait time T, the user has not sent said confirmation, the program commands disconnection of the line and cancels the rating. Otherwise, the program allows the connection to continue and continuance of the rating time count.

The above flow chart refers to the case of telephone connections with analogical signals. However, it applies with obvious variants even to the case of telephone connections with digital signals.

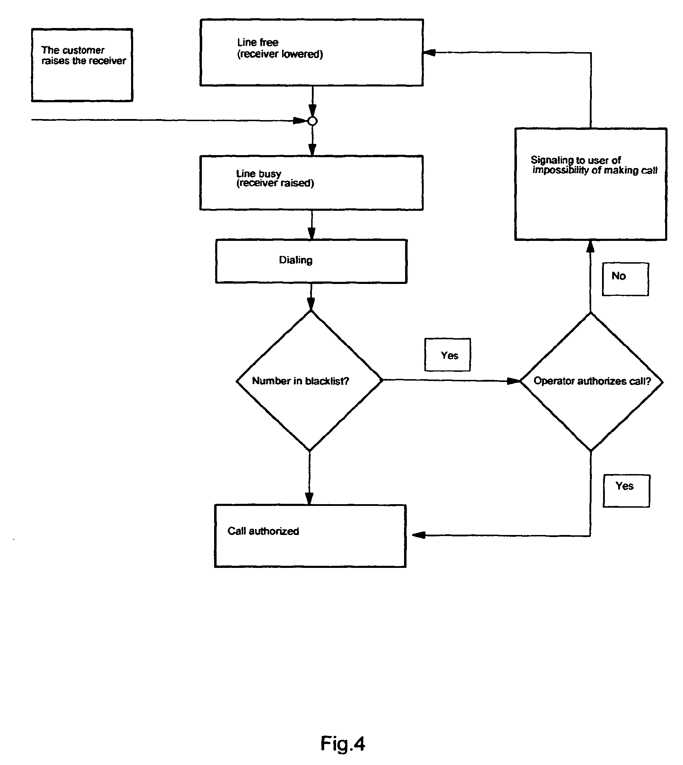

FIG 4 shows the flow chart of the software procedure for management of charges associated with the calls made.

Once the user engages the line by raising the receiver and then has dialed the number called, the program verifies (in a memorized blacklist associated with previous calls not yet paid) if for the same number called there is a charge to the same user for a previous call not settled. If the number called appears in the blacklist, the operator has the choice of signaling to the user the impossibility of making the call or enabling the call anyway. But if the number called does not appear in the blacklist, the called party is authorized automatically without any intervention by the operator.

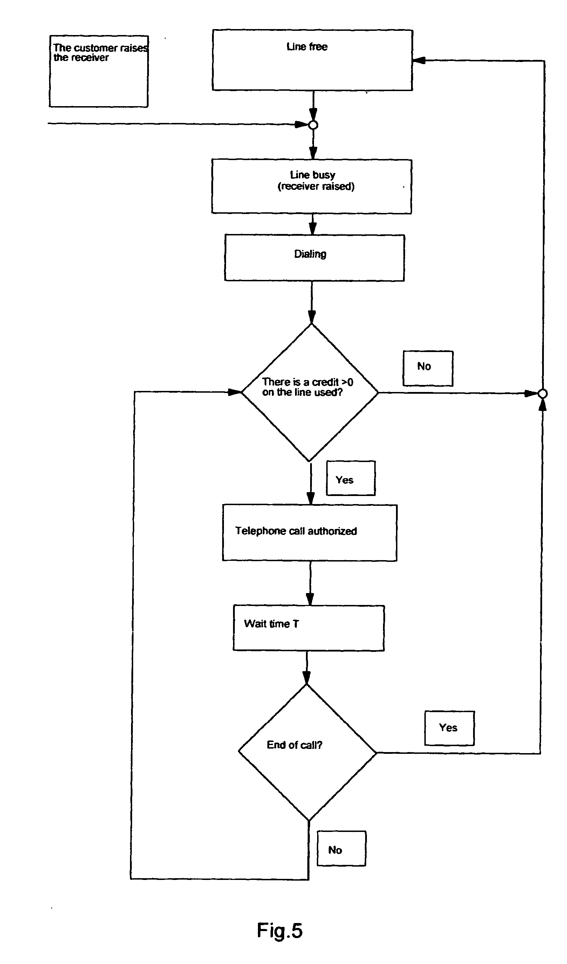

FIG 5 shows the flow chart for the credit-management procedure software associated with the calls made. This procedure allows a user to prepay an amount for the use of a telephone position, upon depletion of which the call underway will be interrupted. In this case, upon engagement of a line by a user and his selection of the called number, the program verifies whether there is credit for the line used and, if there is, authorizes the telephone conversation and if the conversation ends before the time corresponding to the prepaid amount, the program ceases counting the rating and displays the amount remaining to the credit of the user. If on the other hand the telephone conversation is not yet finished upon expiration of the time corresponding to the amount prepaid, the program automatically interrupts the call.

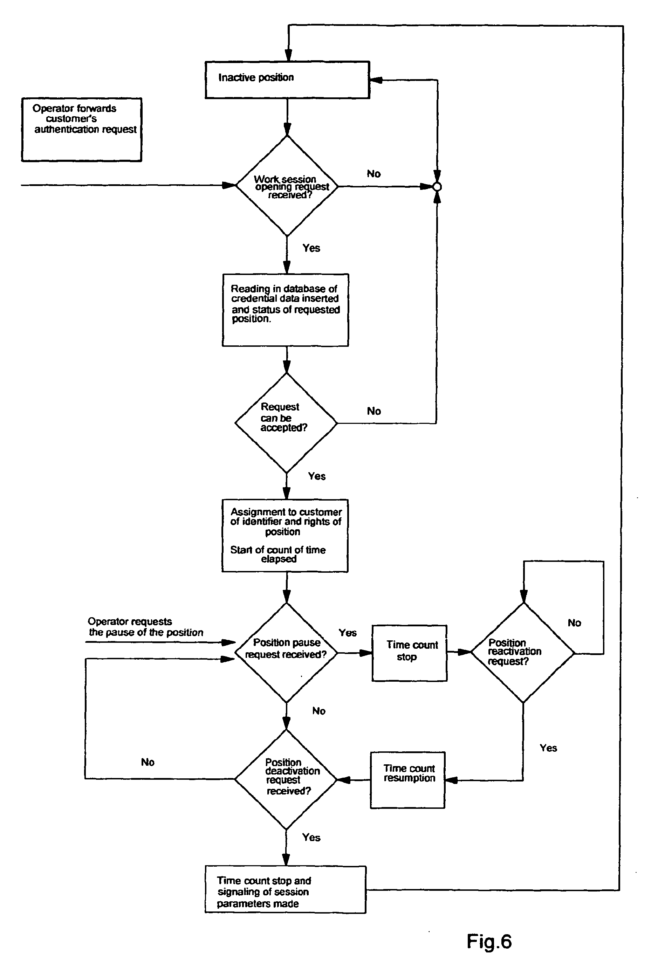

FIG 6 shows the flow chart for the software procedure for management of workstation type positions.

When a user asks to activate a work session on a workstation type position (for editing activity, game playing, internet connection et cetera) the operator, by means of the server program resident on the PC/C sends the demon program residing on the PC/G the command to activate the work session on the chosen workstation. After receiving the data inserted by the operator, the demon program processes them and commands the client software residing in the PC of the workstation involved. To do this, the demon makes use of the database present in the memory of the PC/G on which the data of the system machines are saved. At the end, the demon program sends an answer to the server program which in turn informs the operator of the outcome of the operation. The client program present on the PC of the workstation involved, after receiving from the demon program the command to open the work session, creates on the workstation the work environment for the activity requested and confers on the user the rights to files and directories belonging to said activity. Upon activation of a position, the demon software starts a counter visible on the desktops of the PCs of the user and the operator, which keeps track of the time, price per minute and total count during the entire period of activity of the position.

The operator, upon request of the user or its own initiative, can at any moment put the position at rest, suspending rating time counting, which is resumed once the end of the rest period is commanded.

Either the control computer PC/C or the user can command the end of the work session at any time.

Naturally numerous modifications, adaptations, variants, omissions and replacements of members by others functionally equivalent can be made to the above embodiments described by way of illustration and nonlimiting without abandoning the protection of the following claims.

One such variant might concern the location of the above-mentioned commutation C, detector R, decoder DEC, encoder CED and logical unit L devices which instead of being located outside the PC/C as shown in FIG 1 could be located in the card S of said PC/C.

Another variant could concern the diagram of FIG 2. Indeed, instead of having the gateway interface function carried out by a PC/G reserved for said duty, the function could be entrusted to the telephone exchange control PC/C. In this case the outlets of the card R of the various PC/Ws would be connected to the card R of PC/C which would allow access to the external network.

## Claims

1. Telephone exchange for management of telephone local positions comprising:
- a number of user local positions each having a telephone and a screen for displaying data relating to the telephone call underway,
- an equal number of external telephone lines connectable to the telephones of said positions,
- an operator's telephone for intercepting and manual routing of calls by the operator,
- a commutation device (C) to which the external telephone lines and the internal ones lead,
- a telephone line status detector (R),
- a personal computer (PC/C) having the function of controlling the passing telephone traffic and routing of the calls and provided with a card (S) of the PCl type,
**characterized**
**by** the presence in combination of:
- a decoder (DEC) of DTMF telephone selection signals capable of converting said signals into digital code signals,
- an encoder (COD) capable of converting telephone selection signals expressed in digital coding into DTMF telephone selection signals,
- a logical unit (L) acting as the interface between the computer and the above-mentioned decoder (DEC), encoder (COD) and detector (R), and by the fact that:
- said telephone line status detector (R) is capable of detecting the status of each telephone line leading to a user's position and in particular the actual engagement of an internal line by a user or its disengagement or the arrival on an external line of a ringing signal or of the start of rating or engagement of the line by the called user,
- said card (S) is connected to the user local positions, and is adapted, on control of software installed in the computer (PC/C), for:
- sending to each user position the signals for the information to be displayed on the associated screen,
- commanding the routing of the calls on the external telephone lines,
- processing commands coming from the operator's telephone;
- said commutation device (C) is connected to the above-mentioned decoder (DEC), encoder (COD), detector (R) and logical unit (L),
- said commutation (C), detector (R), decoder (DEC), encoder (COD) and logical unit (L) devices are located within the above-mentioned PCI type card (S),
- a control software is installed on the personal computer (PC/C) and arranged to govern the following operations:
- sending to the commutation device (C) as soon as received by the detector (R) a signal signifying line engagement by a user, a commutation command of the user internal line at input of the decoder (DEC) and of commutation of the output of the encoder (COD) onto one of the external lines and then, after receiving the signal associated with the number called output from the decoder (DEC), sending to the input of the encoder (COD) a binary code signal expressing the number called and the prefix of the telephone service company having the lowest rate, and lastly commutating said internal user line onto the above-mentioned external line, and
- upon reception by the detector (R) of a signal signifying an arriving ringing signal on an external line, providing for commutating said line onto the operator's telephone in order to allow the latter to listen to the call and manually route it to the destination user,
- sending to the commutation device (C) a command to interrupt the telephone connection if, after a predetermined time T from reception of the rating start signal by the telephone line company or in the absence thereof, from reception of the signal of line engagement by the called user, a signal from the user position signifying call start has not reached the user position in the meantime.

2. Telephone exchange in accordance with claim 1 **characterized by** the presence of an interface unit (M) providing for exchange of data between the above-mentioned card (S) and the user positions.

3. Telephone exchange in accordance with claim 1 **characterized by** the presence of:
- a number of personal computers (PC/W) with workstation function,
- a personal computer (PC/G) with gateway interface function for access to the web network,
- server software resident on the control personal-computer (PC/C), client software resident on each of the personal computers (PC/W) with workstation function, and a demon software residing on the personal computer (PC/G) having gateway interface function with said software allowing management of the activation and management of the workstation work sessions,
with said computers (PC/C, PC/G, PC/W) having control, gateway and workstation functions being equipped each with a network card (R) allowing their interconnection, and the network card (R) of each PC having workstation functions and the card (R) of the control (PC/C) being connected to the network card (R) of the PC having gateway function (PC/G).

4. Telephone exchange in accordance with claim 3 in which the web network access gateway interface personal computer function is carried out by the same telephone exchange control personal computer (PC/C).

5. Telephone exchange in accordance with claim 3 or 4 **characterized in that** said demon software is arranged to make use of a database present in the memory of the personal computer (PC/G) with gateway function and in which are recorded the data of the PCs of the resulting system, which are useful upon their interconnection and upon their connection with the external network.

6. Telephone exchange in accordance with claim 1 **characterized in that** the above-mentioned software is arranged to upon arrival of the rating start signal by the line manager or in its absence upon arrival of the line engagement signal by the called user, provide for viewing in the calling user position the rating count start and also to provide for canceling the rating if after the end of the waiting time T the user has not sent the above-mentioned signal signifying call start.

## Patentansprüche

1. Telefonvermittlung zur Verwaltung lokaler Telefonstellen, umfassend:
- eine Anzahl lokaler Nutzerstellen, die jeweils ein Telefon und einen Bildschirm zum Anzeigen von Daten, die sich auf den ablaufenden Telefonanruf beziehen, aufweisen,
- eine gleiche Anzahl externer Telefonleitungen, die mit den Telefonen der Stellen verbunden werden können,
- ein Telefon eines Bedieners zum Abfangen und manuellen Weiterleiten von Anrufen durch den Bediener,
- eine Umschaltvorrichtung (C), zu der die externen und internen Telefonleitungen führen,
- ein Telefonleitungsstatusdetektor (R),
- ein Personal Computer (PC/C) mit der Funktion, den durchgehenden Telefonverkehr zu steuern und die Anrufe weiterzuleiten, und der mit einer Karte (S) vom PCI-Typ versehen ist,
**gekennzeichnet**
**durch** das Vorhandensein einer Kombination aus:
- einem Decodierer (DEC) von DTMP-Telefonauswahlsignalen, die fähig sind, die Signale in Digitalcodesignale umzuwandeln,
- einem Codierer (COD), der fähig ist, die Telefonauswahlsignale, die in digitaler Codierung ausgedrückt sind, in DTMF-Telefonauswahlsignale umzuwandeln,
- einer Logikeinheit (L), die als die Schnittstelle zwischen dem Computer und dem oben genannten Decodierer (DEC), Codierer (COD) und Detektor (R) fungiert,
und **durch** den Umstand, dass
- der Telefonleitungsstatusdetektor (R) fähig ist, den Status jeder Telefonleitung, die zu einer Nutzerstelle führt, und insbesondere das eigentliche Belegtsein einer internen Leitung durch einen Nutzer oder ihr Freisein oder die Ankunft eines Klingelsignals auf einer externen Leitung oder den Beginn der Gebührenermittlung oder des Belegtseins der Leitung durch den angerufenen Nutzer zu detektieren,
- die Karte (S) mit den lokalen Nutzerstellen verbunden ist und dazu ausgelegt ist, unter der Steuerung der auf dem Computer (PC/C) installierten Software:
- die Signale für die auf dem zugeordneten Bildschirm anzuzeigenden Informationen an jede Nutzerstelle zu senden,
- das Weiterleiten der Anrufe auf den externen Telefonleitungen zu befehlen,
- die von dem Telefon des Bedieners kommenden Befehle zu verarbeiten;
- die Umschaltvorrichtung (C) mit dem oben genannten Decodierer (DEC), Codierer (COD), Detektor (R) und der Logikeinheit (L) verbunden ist,
- sich die Umschalt- (C), Detektor- (R), Decodierer- (DEC), Codierer- (COD) und die Logikeinheits- (L) Vorrichtungen in der oben genannten Karte (S) vom PCI-Typ befinden,
- eine Steuersoftware auf dem Personal Computer (PC/C) installiert ist und dazu angeordnet ist, die folgenden Vorgänge zu regeln:
- Senden an die Umschaltvorrichtung (C), direkt nach dem Empfangen von dem Detektor (R), eines Signals, das das Belegtsein einer Leitung durch den Nutzer kennzeichnet, eines Umschaltbefehls der internen Nutzerleitung bei Eingabe des Decodierers (DEC) und der Umschaltung der Ausgabe des Codierers (COD) auf eine der externen Leitungen und dann, nach Empfangen des von dem Decodierer (DEC) ausgegebenen Signals, das der angerufenen Nummer zugeordnet ist, Senden an die Eingabe des Codierers (COD) eines Binärcodesignals, das die angerufene Nummer und die Vorwahl desjenigen Telefondienstes, der den niedrigsten Tarif aufweist, ausdrückt, und schließlich Umschalten der internen Nutzerleitung auf die oben genannte externe Leitung; und
- nach Empfang durch den Detektor (R) eines Signals, das ein auf einer externen Leitung ankommendes Klingelsignal kennzeichnet, Bereitstellen der Umschaltung dieser Leitung auf das Telefon des Bedieners, um es letzterem zu gestatten, den Anruf zu hören und ihn manuell an den Zielnutzer weiterzuleiten,
- Senden an die Umschaltvorrichtung (C) eines Befehls, die Telefonverbindung zu unterbrechen, wenn nach einer vorbestimmten Zeit T nach Empfang des Gebührenermittlungsstartsignals von der Telefonleitungsgesellschaft oder, in Abwesenheit davon, nach Empfang des Signals des Belegtseins der Leitung durch den angerufenen Nutzer, eines Signals von der Nutzerstelle, welches kennzeichnet, dass in der Zwischenzeit kein Anrufbeginn die Nutzerstelle erreicht hat.

2. Telefonvermittlung nach Anspruch 1, **gekennzeichnet durch** das Vorhandensein einer Schnittstelleneinheit (M), die für den Austausch von Daten zwischen der oben genannten Karte (S) und den Nutzerstellen sorgt.

3. Telefonvermittlung nach Anspruch 1, **gekennzeichnet durch** das Vorhandensein von:
- einer Anzahl von Personal Computern (PC/W) mit Arbeitsstationsfunktion,
- eines Personal Computers (PC/G) mit Gatewayschnittstellenfunktion für den Zugriff auf das Webnetzwerk,
- auf dem Steuer-Personal-Computer (PC/C) befindliche Serversoftware, auf jedem der Personal Computer (PC/W) mit Arbeitsstationsfunktion befindliche Clientsoftware und einer auf dem Personal Computer (G) mit Gatewayschnittstellenfunktion befindliche Dämonsoftware, wobei die Software die Verwaltung der Aktivierung und der Verwaltung der Arbeitsstations-Arbeitssitzungen ermöglicht,
wobei die Computer (PC/C, PC/G, PC/W), die über Steuer-Gateway- und Arbeitsstationsfunktionen verfügen, jeweils mit einer Netzwerkkarte (R) ausgestattet sind, welche ihre Verbindung untereinander ermöglicht, und die Netzwerkkarte (R) jedes PC mit Arbeitsstationsfunktionen und die Karte (R) des Steuer-(PC/C) mit der Netzwerkkarte (R) des PCs mit Gatewayfunktion (PC/G) verbunden sind.

4. Telefonvermittlung nach Anspruch 3, wobei die Webnetzwerkzugriffs-Gatewaysschnittstellen-Personal-Computer-Funktion von demselben Telefonvermittlungs-Steuer-Personal-Computer (PC/C) ausgeführt wird.

5. Telefonvermittlung nach Anspruch 3 oder 4, **dadurch gekennzeichnet, dass** die Dämonsoftware so angeordnet ist, dass sie die in dem Speicher des Personal Computer (PC/G) mit Gatewayfunktion vorhandene Datenbank nutzt, auf der die Daten der PCs des resultierenden Systems aufgezeichnet sind, welche bei ihrer Verbindung untereinander und mit dem externen Netzwerk nützlich sind.

6. Telefonvermittlung nach Anspruch 1, **dadurch gekennzeichnet, dass** die oben genannte Software so angeordnet ist, dass sie bei Ankunft des Gebührenermittlungsstartsignals von dem Leitungsverwalter oder, in seiner Abwesenheit, bei Ankunft des Leitungs-Belegt-Signals durch den angerufenen Nutzer, sie an der Stelle des anrufenden Nutzers für die Ansicht des Gebührenermittlungsstarts und für die Aufhebung der Ermittlung sorgt, wenn der Nutzer nach dem Ende der Wartezeit T nicht das oben genannte Signal gesendet hat, welches den Anrufbeginn kennzeichnet.

## Revendications

1. Central téléphonique pour la gestion de positions locales de téléphones comprenant :
plusieurs positions locales d'utilisateurs ayant chacune un téléphone et un écran d'affichage de données concernant un appel téléphonique en cours ;
un nombre égal de lignes téléphoniques externes connectables aux téléphones desdites positions ;
un téléphone d'opérateur pour intercepter et acheminer manuellement des appels par l'opérateur ;
un dispositif de commutation (C) vers lequel les lignes téléphoniques externes et les lignes internes conduisent ;
un détecteur d'état de ligne téléphonique (R) ;
un ordinateur personnel (PC/C) ayant pour fonction de commander le passage de communications téléphoniques et l'acheminement des appels et muni d'une carte (S) du type PCI ;
**caractérisé par** la présence en combinaison de :
un décodeur (DEC) de signaux de sélection téléphoniques DTMF aptes à convertir lesdits signaux en signaux de code numérique ;
un codeur (COD) capable de convertir des signaux de sélection téléphoniques exprimés en codage numérique en signaux de sélection téléphoniques DTMF ;
un module logique (L) agissant comme interface entre l'ordinateur et le décodeur (DEC), le codeur (COD) et le détecteur (R) susmentionnés ;
et en ce que :
le détecteur d'état de ligne téléphonique (R) est apte à détecter l'état de chaque ligne téléphonique conduisant à une position d'utilisateur et en particulier l'engagement effectif d'une ligne interne par l'utilisateur ou son désengagement ou l'arrivée sur une ligne externe d'un signal de sonnerie ou du début de facturation ou de la mise en route de la ligne par l'utilisateur appelé ;
la carte (S) est connectée aux positions locales d'utilisateurs et est adaptée, sur commande du logiciel installé dans l'ordinateur (PC/C), pour :
envoyer à chaque position d'utilisateur les signaux pour les informations à afficher sur l'écran associé ;
commander l'acheminement des appels sur les lignes téléphoniques externes ;
traiter des ordres provenant du téléphone de l'opérateur ;
le dispositif de commutation (C) est connecté au décodeur (DEC), au codeur (COD), au détecteur (R) et au module logique (L) susmentionnés ;
le dispositif de commutation (C), le détecteur (R), le décodeur (DEC), le codeur (COD), et le module logique (L) sont disposés dans la carte de type PCI (S) susmentionnée ;
un logiciel de commande est installé sur l'ordinateur personnel (PC/C) et agencé pour commander les opérations suivantes :
envoyer au dispositif de commutation (C), dès que le détecteur (R) a reçu un signal indiquant l'engagement d'une ligne par un utilisateur, un ordre de commutation de la ligne interne de l'utilisateur à l'entrée du décodeur (DEC) et de commutation de la sortie du codeur (COD) sur l'une des lignes externes et ensuite, après réception du signal associé au numéro appelé fournit à partir du décodeur (DEC), envoyer à l'entrée du codeur (COD) un signal de code binaire exprimant le numéro appelé et le préfixe de la compagnie de service téléphonique ayant un plus faible tarif, et enfin commuter la ligne d'utilisateur interne sur la ligne externe susmentionnée ; et
à la réception par le détecteur (R) d'un signal indiquant un signal de sonnerie arrivant sur une ligne externe, fournir pour commutation la ligne sur le téléphone de l'opérateur pour permettre à ce dernier d'écouter l'appel et de l'acheminer manuellement vers l'utilisateur de destination ;
envoyer au dispositif de commutation (C) un ordre d'interruption de la connexion téléphonique si, après une durée prédéterminée T à partir de la réception du signal du début de facturation par la compagnie de la ligne téléphonique ou en l'absence de celui-ci à partir de la réception du signal de mise en oeuvre de ligne par l'utilisateur appelé, un signal en provenance de la position d'utilisateur indiquant le début d'appel n'a pas encore atteint la position de l'utilisateur dans l'intervalle.

2. Central téléphonique selon la revendication 1, **caractérisé par** la présence d'un module d'interface (M) assurant un échange de données entre la carte (S) susmentionnée et les positions d'utilisateurs.

3. Central téléphonique selon la revendication 1, **caractérisé par** la présence de :
plusieurs ordinateurs personnels (PC/W) pour une fonction de station de travail ;
un ordinateur personnel (PC/G) avec une fonction d'interface de passerelle pour accès au réseau web ;
un logiciel de serveur résidant sur l'ordinateur personnel de commande (PC/C), un logiciel client résidant sur chacun des ordinateurs personnels (PC/W) ayant une fonction de station de travail, et un logiciel démon résidant sur l'ordinateur personnel (PC/G) ayant une fonction d'interface de passerelle vers ledit logiciel permettant la gestion de l'activation et la gestion des sessions de travail des stations de travail ;
chacun des ordinateurs (PC/C, PC/G, PC/W) ayant des fonctions de commande, de passerelle, et de station de travail étant équipé d'une carte de réseau (R) permettant son interconnexion et la carte de réseau (R) de chaque PC ayant une fonction de station de travail et la carte (R) de la commande (PC/C) étant connectée à la carte de réseau (R) du PC ayant la fonction de passerelle (PC/G).

4. Central téléphonique selon la revendication 3, dans lequel la fonction d'ordinateur personnel d'interface de passerelle d'accès au réseau est effectuée par le même ordinateur personnel de commande du central téléphonique (PC/C).

5. Central téléphonique selon la revendication 3 ou 4, **caractérisé en ce que** le logiciel démon est agencé pour utiliser une base de données présente dans la mémoire de l'ordinateur personnel (PC/G) ayant une fonction de passerelle et dans lequel sont enregistrées les données des PC du système résultant qui sont utiles par suite de leur interconnexion et lors de leur connexion avec le réseau externe.

6. Central téléphonique selon la revendication 1, **caractérisé en ce que** le logiciel susmentionné est agencé pour, lors de l'arrivée du signal de début de facturation par le gestionnaire de ligne ou en son absence lors de l'arrivée du signal de mise en oeuvre de ligne par l'utilisateur appelé, assurer l'observation à la position de l'utilisateur appelant du début de comptage de facturation et également pour assurer la surpression de la facturation si, après la fin du temps d'attente T, l'utilisateur n'a pas envoyé le signal susmentionné indiquant un début d'appel.
